# EUROPÄISCHE PATENTSCHRIFT

(11) **EP 0 628 522 B1**
(45) Veröffentlichungstag und Bekanntmachung des Hinweises auf die Patenterteilung: **23.04.1997**
(21) Anmeldenummer: 94107748.9
(22) Anmeldetag: 19.05.1994
(51) Int. Cl.: C04B 18/16, E01C 7/08

(54) **Beton für Fahrbahndecken und Verfahren zur Herstellung derselben**
Concrete for road surfaces and process for preparation thereof
Beton pour surfaces routiers et procédé pour leur préparation

(30) Priorität: 26.05.1993 DE 4317451
(43) Veröffentlichungstag der Anmeldung: 14.12.1994
(73) Patentinhaber: Gebr. von der Wettern GmbH, D-50679 Köln (DE)
(72) Erfinder: Zimmermann, Wolfgang, D-53804 Much (DE)
(74) Vertreter: Werner, Hans-Karsten, Dr.Dipl.-Chem.

(56) Entgegenhaltungen:
- DE-A- 4 110 944
- DE-A- 4 134 910
- STRASSE + AUTOBAHN, Bd.44, Oktober 1993, BERLIN DE Seiten 615 - 621 H.-J. FRANKE 'Recycling von Betondecken im Autobahnbau.'
- STRASSE + AUTOBAHN, Bd.44, Dezember 1993, BERLIN DE Seiten 715 - 718 R. SPRINGENSCHMID ET AL 'Zur Technologie der Wiederverwendung von altem Strassenbeton.'
- CIVIL ENGINEERING, September 1981, LONDON GB Seiten 33 - 37 'Recycling concrete materials.'

## Beschreibung

Gegenstand der vorliegenden Erfindung ist Beton für Fahrbahndecken nach ZTV Beton-StB 91 bestehend aus mindestens 340 kg/m³ Zement und Zuschlägen mit einer Kornzusammensetzung gemäß DIN 1045 und mindestens einer erforderlichen Korngruppe größer als 8 mm sowie Verfahren zur Herstellung derselben.

Die ZTV Beton-StB 91 (Zusätzliche Technische Vertragsbedingungen und Richtlinien für den Bau von Fahrbahndecken aus Beton, Ausgabe 1991, herausgegeben vom Bundesminister für Verkehr, beziehbar von der Geschäftsstelle der Forschungsgesellschaft für Straßen- und Verkehrswesen e.V., Konrad-Adenauer-Str., 5000 Köln 50) schreibt vor, daß die Korzusammensetzung des Betonzuschlags der DIN 1045 Bild 2 oder 3 entsprechen muß. Für die Bauklassen SV, I - IV werden mindestens drei Korngruppen nach DIN 4226 gefordert, von denen mindestens eine über 8 mm vorhanden ist; siehe Seiten 22 und 23 der ZTV Beton-StB 91. Weiterhin wird vorgeschrieben, daß für die Bauklassen SV, I -III für die Körnung über 8 mm mindestens 50 Gew.-% gebrochener Zuschlag verwendet werden muß. Der Anteil an gebrochenem Gestein, bezogen auf den Gesamtzuschlag, muß mindestens 35 Gew.-% betragen. Der Zuschlag muß die erhöhte Anforderung an die Kornform für Edelsplitt erfüllen und einen ausreichend hohen Widerstand gegen Polieren aufweisen; vergl. Seite 18 der ZTV Beton-StB 91.

Für den Bau neuer Fahrbahndecken sind oftmals vorhandene alte Fahrbahndecken zu entfernen (Tiefeinbau), da die lichte Höhe von Brücken sowie die Höhe angrenzender Baulichkeiten es nicht gestatten, die neue Fahrbahndecke im Hocheinbau herzustellen.

In der Vergangenheit wurden die aufgenommenen alten Fahrbahndecken abgefahren und in mehr oder weniger geeignete Deponien verbracht. Um dem Wiederverwendungsgebot des Abfallgesetzes zu entsprechen, sind auch bereits derartige aufgenommene und gebrochene alte Fahrbahndecken verwendet worden zur Herstellung des Unterbaues. Es ist auch schon versucht worden, die aufgenommene und gebrochene alte Fahrbahndecke insgesamt mit frischem Zement zu vermischen und als Unterbeton der neuen Fahrbahndecke einzubauen. Eine derartige Fahrbahndecke entspricht aber nicht der ZTV Beton-StB 91.

Ein Artikel von Mosch "Wiederverwertung von Baustoffen" in TIS 10/86, Seiten 523 bis 526 schildert ausführlich die Probleme der Wiederverwertung von Baustoffen. Es handelt sich um eine Zusammenstellung der gestellten Aufgaben, für die jedoch vielfach noch Lösungen ausstehen. Ausführlich geschildert ist der Ausbau und die Wiederverwertung von Asphalt, d.h. ein mit Bitumen gebundenes Material, welches erneut in derartige Straßen eingebaut werden kann. Es finden sich jedoch keine Hinweise auf den Ausbau und die Wiederverwendung von Fahrbahndecken aus Beton, geschweige denn für die qualitativ hochwertigen Fahrbahndecken nach ZTV-Beton StB 91.

Die DE-OS 41 10 944 beschreibt ein Verfahren zur Wiederverwertung teerhaltiger Baustoffe, insbesondere von Straßenaufbruchmaterial. Teerhaltige Baustoffe bringen besondere Probleme mit sich. Nach dem dort beschriebenen Material werden Bausteine geformt, die als Pflastersteine, Formsteine für den Straßen- und Tiefbau sowie auch als Füllmaterial für den Erdbau eingesetzt werden können. All diese Materialien sind sicherlich ungeeignet für den Bau von Fahrbahndecken nach der ZTV-Beton StB 91.

Die JP 2-293358 (A) beschreibt die Verwertung von gemahlenem Beton, Abfallmaterial mit Flugasche und den Schlamm von Kläranlagen zur Herstellung des Unterbaus von Straßen.

Die Erfindung hat sich die Aufgabe gestellt, die alten aufgenommenen Fahrbahndecken aus Beton möglichst vollständig und hochwertig wiederzuverwenden unter gleichzeitiger Erfüllung der Anforderungen der ZTV Beton-StB 91 sowie anderer technischer Vorschriften bei der Verwendung von Altmaterial in anderen Schichten.

Es wurde jetzt gefunden, daß die Aufgabe dadurch gelöst werden kann, daß man aus der aufgenommenen und gebrochenen alten Fahrbahndecke die Siebfraktion größer als 8 mm abtrennt und als Zuschlagstoff für die Herstellung der neuen Fahrbahndecke aus Beton verwendet. Bei Verwendung geeigneter Brechwerkzeuge ist es möglich, die Siebfraktion größer als 8 mm zur Hauptfraktion zu machen, so daß nur relativ kleine Mengen Unterkorn und Überkorn abzutrennen sind. Diese abgetrennten Mengen können ohne weiteres für den Unterbau verwendet werden. Um die Bedingungen der ZTV Beton-StB 91 zu erfüllen, kann es notwendig sein, einen Teil der Fraktion größer als 8 mm in Form von Edelsplitt zuzugeben, damit diese mindestens 35 Gew.-% des Gesamtzuschlages ausmacht. Die neue Fahrbahndecke kann in sehr wirtschaftlicher Weise hergestellt werden. Sie erfüllt die Vorschriften der ZTV Beton-StB 91. Es ist nicht mehr nötig, die alte aufgenommene Fahrbahndecke abzutransportieren und zu deponieren. Die alte Fahrbahndecke wird vielmehr im vollen Umfang beim Bau bzw. der Sanierung der alten Straße wiederverwendet.

Um Qualitätsminderungen bei der Verwendung der alten Fahrbahndecke zu vermeiden, empfiehlt es sich, vor dem Zertrümmern die vorhandenen Fugen auszupflügen und Holzbestandteile auszusortieren. Derartige Verunreinigungen könnten zu Qualitätseinbußen der neuen Fahrbahndecke führen.

Gegenstand der vorliegenden Erfindung sind somit zunächst der Beton für einlagige Fahrbahndecken gemäß des Anspruchs 1 sowie das Verfahren zur Wiederverwendung von alten Fahrbahndecken gemäß Ansprüchen 2 und 3. Da die neue Fahrbahndecke höchsten Anforderungen genügt, ist sie insbesondere geeignet für die Bauklasse SV, I - IV. Selbstverständlich kann von der Erfindung auch Gebrauch gemacht werden bei Fahrbahndecken der Bauklassen V - VI, für die jedoch nur Korngruppen größer 4 mm vorgeschrieben sind. Gegebenenfalls ist es notwendig, die aufgenommene alte Fahrbahndecke stärker aufzubrechen, um nicht zuviel Überkorn zu behalten. Für derartige Bauklassen mit geringerer Anforderung kann auch die Korngruppe größer 4 mm ausgesiebt und mitverwendet werden.

## Patentansprüche

1. Beton für einlagige Fahrbahndecken nach ZTV Beton-StB 91, Bauklasse SV, bestehend aus mindestens 340 kg/m³ Zement und Zuschlägen mit einer Kornzusammensetzung gemäß DIN 1045 und mindestens einer erforderlichen Korngruppe größer als 8 mm, dadurch gekennzeichnet, daß mindestens eine der erforderlichen Korngruppen größer als 8 mm aus Betongranulat besteht, gewonnen aus aufgenommener und aufbereiteter alter Fahrbahndecke.

2. Verfahren zur Wiederverwendung von alten aufgenommenen und aufbereiteten Fahrbahndecken aus Beton, dadurch gekennzeichnet, daß die Korngruppe größer als 8 mm verwendet wird als Zuschlagstoff für die Herstellung einer einlagigen neuen Fahrbahndecke aus Beton nach ZTV Beton-StB 91, Bauklasse SV, bestehend aus mindestens 340 kg/m³ Zement und Zuschlägen mit einer Kornzusammensetzung gemäß DIN 1045 und mindestens eine Korngruppe größer als 8 mm.

3. Verfahren gemäß Anspruch 2, dadurch gekennzeichnet, daß vor dem Zertrümmern der alten Fahrbahn die vorhandenen Fugen ausgepflügt und Holzbestandteile aussortiert werden.

## Claims

1. Concrete for one-layered roadway platforms according to German regulation ZTV Beton-StB 91, Bauklasse SV, consisting of at least 340 kg/m³ of cement, and aggregates having a grain composition according to DIN 1045 and at least one required grain group of larger than 8 mm, characterized in that at least one of the required grain groups of larger than 8 mm consists of concrete granules obtained from detached and processed old roadway platform.

2. A method for reusing old, detached and processed roadway platforms made of concrete, characterized in that the grain group of larger than 8 mm is used as an aggregate for the preparation of a one-layered new roadway platform made of concrete according to German regulation ZTV Beton-StB 91, Bauklasse SV, consisting of at least 340 kg/m³ of cement, and aggregates having a grain composition according to DIN 1045 and at least one grain group of larger than 8 mm.

3. The method according to claim 2, characterized in that prior to disrupting the old roadway, the present joints are ploughed out and wooden components are selected out.

## Revendications

1. Béton pour des revêtements de route à une seule couche selon les ZTV Beton-StB 91, catégorie de bâtiment SV, se composant d'au moins 340 kg/m³ de ciment et de granulats présentant une composition granulométrique selon DIN 1045 et d'au moins un groupe granulométrique nécessaire de plus de 8 mm, caractérisé en ce qu'au moins l'un des groupes granulométriques requis, supérieur à 8 mm se compose de granulats de béton, obtenus à partir de l'ancien revêtement de route qui a été ramassé et prépare.

2. Procédé pour la récupération des anciens revêtements de route en béton qui ont été ramassés et préparés, caractérisé en ce que le groupe granulométrique supérieur à 8 mm est utilisé comme granulats pour la réalisation d'un nouveau revêtement de route en béton à une couche selon les ZTV Beton-StB 91, catégorie de bâtiment SV, se composant d'au moins 340 kg/m³ de ciment et de granulats avec une composition granulométrique selon DIN 1045 et d'au moins un groupe granulométrique nécessaire, supérieur à 8 mm.

3. Procédé selon la revendication 2, caractérisé en ce que, avant la destruction de l'ancien revêtement de route, les joints existants sont extraits en étant labourés et les éléments en bois sont triés.
